# EUROPEAN PATENT APPLICATION

(11) **EP 2 214 435 A1**
(43) Date of publication of application: **04.08.2010**
(21) Application number: 09001347.5
(22) Date of filing: 30.01.2009
(51) Int. Cl.: H04W 28/06

(54) **Efficient packet data unit transmissions and re-transmissions involving a relay node**

(71) Applicant: Panasonic Corporation, Kadoma-shi Osaka 571-8501 (JP)
(72) Inventor: Gonsa, Osvaldo, 63225 Langen (DE); Loehr, Joachim, 63225 Langen (DE); Wengerter, Christian, 63225 Langen (DE)
(74) Representative: Grünecker, Kinkeldey, Stockmair & Schwanhäusser Anwaltssozietät

(57) **Abstract**

The invention relates to a method for transmitting packet data units (PDU) from a eNodeB via a relay node to a mobile node. The relay node determines whether each PDU from the eNB is appropriate for the current channel conditions to the MN. Consequently, only if PDU is appropriate for the channel quality, same is transmitted. If not, eNB re-transmits the PDU according to current channel conditions. Moreover, the MN when failing to decode a PDU correctly, requests the re-transmission of said PDU from the eNB via a status report. The relay node intercepts said status report and learns which PDU(s) are to be re-transmitted. The relay node determines whether the unsuccessful PDUs are still available in its transport buffer or not andonly carries out the re-transmission if the PDU is in its buffer. If not, the re-transmission of said unsuccessful PDU is performed by the eNB.

## Description

### FIELD OF THE INVENTION

The invention relates to a method for transmitting packet data units between a radio resource control entity and a mobile node via a relay node. Furthermore, the invention relates to a relay node, a radio resource control entity and a mobile node that participate in the invention.

### TECHNICAL BACKGROUND

UMTS (Universal Mobile Telecommunications System) is the 3G (3^{rd} Generation) mobile communication system standardised by 3GPP (3^{rd} Generation Partnership Project). The 3GPP launched a study item "Evolved UTRA and UTRAN" better known as "Long Term Evolution (LTE)". The study will investigate means of achieving major leaps in performance in order to improve service provisioning, and to reduce user and operator costs. Out of that and because interworking with other radio access technologies should be possible, the need arose for a new evolved Packet Core Network.

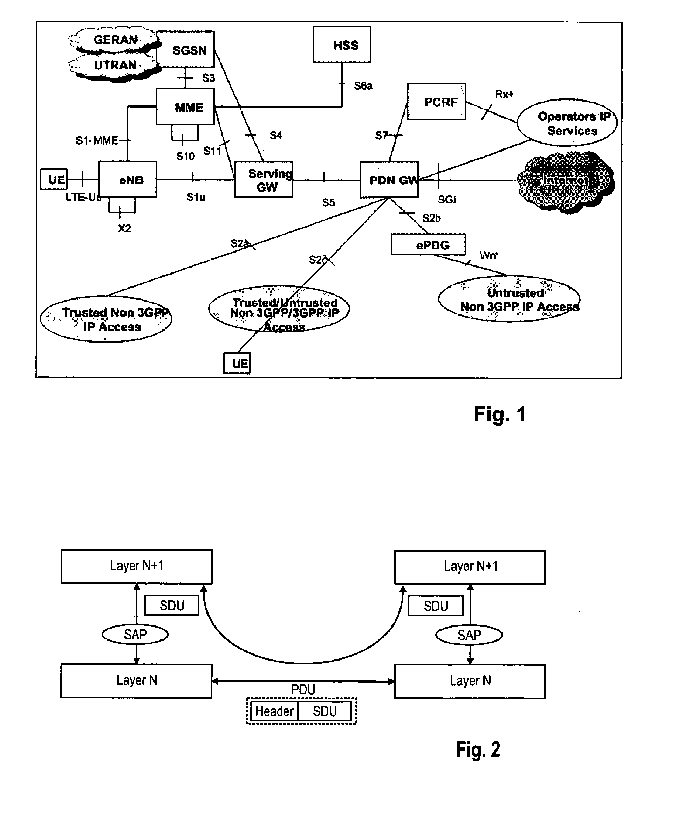

An exemplary representation of the E-UTRAN architecture is given in Fig. 1. The E-UTRAN consists of evolved Node Bs (eNB or eNodeB), providing the E-UTRA user plane (PDCP/RLC/MAC/PHY) and control plane (RRC) protocol terminations towards the mobile node.

The eNB hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. Further, it performs many functions including radio resource management, admission control, scheduling, enforcement of negotiated UL-QoS (Quality of Service), cell information broadcast, ciphering/deciphering of user and control plane data, and compression/decompression of DL/UL user plane packet headers.

The eNBs are also connected by means of the S1 interface to the EPC (Evolved Packet Core), more specifically to the MME (Mobility Management Entity) by means of the S1-MME, and to the Serving Gateway (S-GW) by means of the S1-U.

In more detail, the RLC layer is responsible for segmentation/concatenation, retransmission handling, and in-sequence delivery to higher layers. Unlike WCDMA, the RLC protocol is located in the eNodeB since there is only a single type of node in the LTE radio-access-network architecture. In the control plane the RLC offers services to the PDCP in the form of Signaling Radio Bearers (SRB), and in the user plane in the form of Radio Bearer (RB).

The MAC layer handles hybrid-ARQ retransmissions and both uplink and downlink scheduling. The scheduling functionality may be located in the eNodeB, which has one MAC entity per cell, in both uplink and downlink. The hybrid-ARQ protocol part is present in the transmitting and receiving end of the MAC protocol. The MAC offers services to the RLC in the form of logical channels.

The PHY layer handles coding/decoding, modulation/demodulation, multi-antenna mapping, and other typical physical layer functions. The physical layer offers services to the MAC layer in the form of transport channels,

### (H)ybrid ARQ Schemes

The RLC re-transmission mechanism is responsible for providing error-free delivery of data to higher layer. To accomplish this, a re-transmission protocol operates between the RLC entities in the receiver and transmitter. Although the RLC layer would be capable of handling transmission errors due to noise, unpredictable channel variations, etc., this is in most cases handled by the HARQ re-transmission protocol of the MAC layer. The use of a retransmission mechanism in the RLC layer may therefore seem superfluous at first. However, this is not the case, and the use of both RLC- and MAC-based re-transmission mechanisms is in fact well motivated by the differences in the feedback signaling. For instance, the RLC-ARQ mechanism takes care of the possible NACK to ACK errors that may occur with the MAC HARQ mechanism.

A common technique for error detection and correction in packet transmission systems over unreliable channels is called Hybrid Automatic Repeat reQuest (HARQ), which is a combination of Forward Error Correction (FEC) and ARQ.

Automatic Repeat-reQuest (ARQ) is an error control method for data transmissions using acknowledgments and timeouts to achieve reliable data transmissions. An acknowledgment is a message sent by the receiver to the transmitter to indicate that it has correctly received a data packet. If the sender does not receive an acknowledgment before the timeout, being a reasonable time interval for receiving an acknowledgment, it usually re-transmits the frame until it receives an acknowledgment or exceeds a predefined number of re-transmissions.

Forward error correction is employed to control errors in data transmissions, wherein the sender adds redundant data to its messages. This enables the receiver to detect whether an error has occurred, and further allows to correct some errors without requesting additional data from the sender. Consequently, since within a certain limit FEC allows to correct some of the errors, re-transmission of data packets can often be avoided. However, due to the additional data that is appended to each data packet, this comes at the cost of higher bandwidth requirements.

If a FEC encoded packet is transmitted and the receiver fails to decode the packet correctly (errors are usually checked by a CRC (Cyclic Redundancy Check)), the receiver requests a re-transmission of the packet.

When the RLC is configured to request re-transmission of missing PDUs as described above, it is said to be operating in Acknowledged Mode (AM). This is similar to the corresponding mechanism used in WCDMA/HSPA.

Overall, there are three operational modes for RLC: Transparent Mode (TM), Unacknowledged Mode (UM) and Acknowledged Mode (AM). Each RLC entity is configured by RRC to operate in one of these nodes.

In Transparent Mode no protocol overhead is added to RLC SDUs received from higher layer. In special cases, transmission with limited segmentation/reassembly capability can be accomplished. It has to be negotiated in the radio bearer setup procedure, whether segmentation/reassembly is used. The transparent mode is e.g. used for very delay-sensitive services like speech.

In Unacknowledged Mode data delivery is not guaranteed since no retransmission protocol is used. The PDU structure includes sequence numbers for integrity observations in higher layers. Segmentation and concatenation are provided by means of header fields added to the data. The RLC entity in Unacknowledged mode is unidirectional, since there are no associations defined between uplink and downlink. If erroneous data is received, the corresponding PDUs are discarded or marked depending on the configuration. In the transmitter, the RLC SDUs which are not transmitted within a certain time specified by a timer are discarded and removed from the transmission buffer. The RLC SDUs, received from higher layer, are segmented/concatenated into RLC PDUs on sender side. On receiver side reassembly is performed correspondingly. The unacknowledged mode is used for services where error-free delivery is of less importance compared to short delivery time, for example, for certain RRC signaling procedures, a cell broadcast service such as MBMS and voice over IP (VoIP).

In **Acknowledged Mode** the RLC layer supports error correction by means of an Automatic Repeat Request (ARQ) protocol, and is typically used for IP-based services such as file transfer where error-free data delivery is of primary interest. RLC retransmissions are for example based on RLC status reports, i.e. ACK/NACK, received from the peer RLC receiving entity. The acknowledged mode is designed for a reliable transport of packet data through re-transmission in the presence of high air interface bit error rates. In case of erroneous or lost PDUs, re-transmission is conducted by the sender upon reception of a status report from the receiver.

ARQ is used as a retransmission scheme for retransmission of erroneous or missed PDUs. For instance, by monitoring the incoming sequence numbers, the receiving RLC entity can identify missing PDUs. Then, a status report can be generated at the receiving RLC side, and fed back to the transmitting RLC entity, requesting re-transmission of missing or unsuccessfully decoded PDUs. The status report can e.g. be polled by the sender or self-triggered, i.e. upon detection a break in the sequence numbers order, wherein the frequency. The receiver sends the status report to the sender when triggered. The report typically indicates the reception status (either ACKs or NACKs) within the receiving window and up to the last received PDU. Thus, a status report may typically contain reception information about multiple PDUs.

An acknowledged mode RLC can be configured to provide both in-sequence and out-of sequence delivery to higher layers. As already mentioned before, in addition to data PDU delivery, status and reset control PDUs can be signaled between the peer entities. The acknowledged mode is the default mode for packet-type services, such as interactive and background services.

In summary, the main services and functions of the RLC sublayer include:
- Transfer of upper layer PDUs supporting AM, UM or TM data transfer;
- Error Correction through ARQ;
- Segmentation according to the size of the TB;
- Resegmentation when necessary (e.g. when the radio quality, i.e. the supported TB size changes)
- Concatenation of SDUs for the same radio bearer is FFS;
- In-sequence delivery of upper layer PDUs;
- Duplicate Detection;
- Protocol error detection and recovery;
- SDU discard;
- Reset

### Layer Services and Data Exchange

In the following the terms service data unit (SDU) and protocol data unit (PDU) as used herein are defined in connection with Fig. 2. In order to formally describe in a generic way the exchange of packets between layers in the OSI model, SDU and PDU entities have been introduced. An SDU is a unit of information (data/information block) transmitted from a protocol at the layer N+1 that requests a service from a protocol located at layer N via a so-called service access point (SAP). A PDU is a unit of information exchanged between peer processes at the transmitter and at the receiver of the same protocol located at the same layer N.

A PDU is generally formed by a payload part consisting of the processed version of the received SDU(s) preceded by a layer N specific header and optionally terminated by a trailer. Since there is no direct physical connection (except for Layer 1) between these peer processes, a PDU is forwarded to the layer N-1 for processing. Therefore, a layer N PDU is from a layer N-1 point of view an SDU.

### Transmitter Segmentation and Receiver re-assembly

In addition to re-transmission handling and in-sequence delivery, the RLC is also responsible for segmentation and concatenation, as will be explained in more detail below.

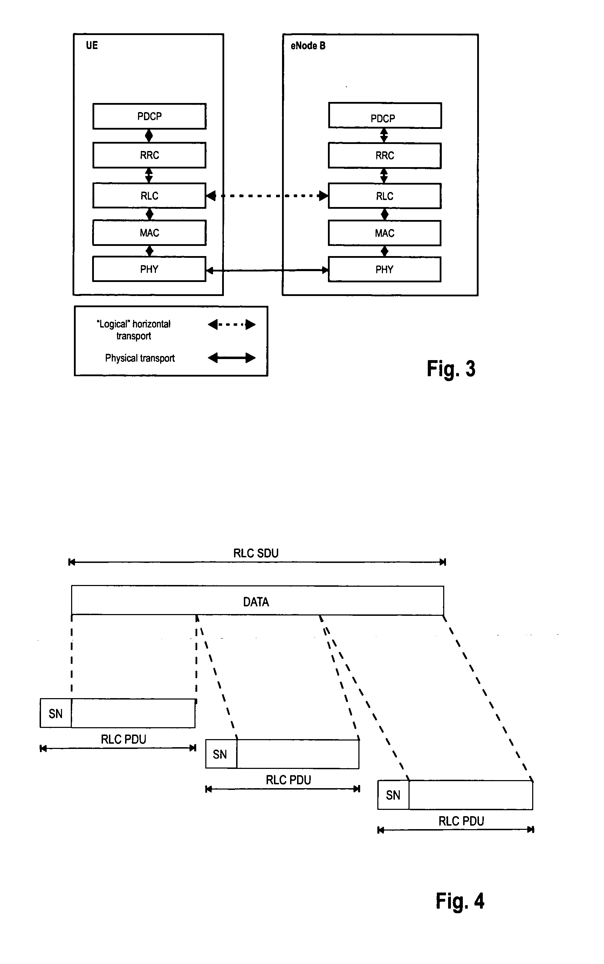

Referring to Fig. 3, in the UE the RLC layer segments, concatenates or pads RLC SDUs received from a higher layer (e.g. PDCP) to a size suitable for transmission on a radio channel. Depending on the scheduler decision located at the MAC layer, a certain amount of data is selected for transmission from the RLC SDU buffer, and the RLC SDUs are segmented/concatenated to create the RLC PDUs. That is, the RLC layer constructs an RLC PDU suitable for transmission on the radio channel by inserting information on segmentation/concatenation/padding and a sequence number into the resulting data, as illustrated in Fig. 4, and provides the RLC PDU to the lower layers (MAC and PHY).

Whereas WCDMA/HSPA prior to Release 7 uses a semi-static PDU size, for LTE the RLC PDU sizes may vary dynamically. For high data rates, a large PDU size results in a smaller relative overhead, while for low data rates, a small PDU size is required, because the payload would otherwise be too large. Hence, as the LTE data rates may range from a few kbit/s to well above on hundred Mbit/s, dynamic PDU sizes may be used in LTE independent from the data rate. Usually, since the RLC, scheduler and rate adaption mechanisms are all located in the eNodeB, dynamic PDU sizes are easily supported for LTE.

In more detail, the RLC layer of the transmitter receives an RLC SDU of a particular size, e.g. a 100 byte IP packet from the higher layer. If a data size transmittable on the radio channel is 40 bytes (this being indicated by the lower MAC layer), the RLC layer segments the RLC SDU into three RLC PDUs. Each RLC PDU has 40 bytes and also includes an RLC header. The RLC header includes amongst other things a Sequence Number (SN). The SN increases continually by 1 for every RLC PDU. In this case, the SNs indicate the sequence of the three RLC PDUs

In the receiver the RLC layer recovers data by interpreting the sequence number and segmentation/concatenation/padding information of an RLC PDU received from a lower layer, and re-constructs an RLC SDU by concatenating or segmenting the data in correspondence with the operation of the transmitter. The right order for combining the RLC PDUs to the corresponding RLC SDU is given by the SN. The reconstructed RLC SDU is then provided to a higher layer.

MAC Protocol Data Units (PDUs) that are sent to the physical layer are called Transport Blocks (TBs). A set of TBs are sent every Transmission Time Interval (TTI) to the physical layer with a corresponding Transport Format (TF), which describes the physical layer attributes to be used. The Transport Format is selected according to the channel conditions, using e.g. AMC.

### Link Adaptation - Adaptive Modulation & Coding (AMC)

In mobile communication systems link adaptation is a typical measure to exploit the benefits resulting from dynamic resource allocation. One link adaptation technique is AMC (Adaptive Modulation and Coding). Here, the data rate per data block or per scheduled user is adapted dynamically to the instantaneous channel quality of the respective allocated resource by dynamically changing the modulation and coding scheme (MCS) in response to the channel conditions. With AMC the power of the transmitted signal is held constant over an interval, but the modulation and coding format is changed to match the current received signal quality or channel condition. Consequently, users close to the eNB are typically assigned higher order modulation with higher code rates (e.g. 64-QAM with R=3/4 turbo codes), but the modulation and/or the coding rate will decrease as the distance to the eNB increases. QPSK modulation is more robust than QAM and can tolerate higher levels of interference but has a lower transmission bit rate. When the radio link conditions are good, more bits are punctured and the information bit rate is increased. In poor link conditions all redundant bits are transmitted and the information bit rate drops.

However, AMC is sensitive to measurement error and delay. Thus, errors in the channel estimate will cause the scheduler to select the wrong data rate or modulation. Delay in reporting the channel measurements also reduces the reliability of the channel quality estimate due to the constantly varying wireless channel.

### Channel Quality Determination

There are several approaches to determine the current quality of a channel. For example, the transmitting entity may compile information on the channel conditions from a channel quality information (CQI) signal, which is estimated by the receiver (e.g. UE) and then transmitted to the transmitter (e.g. eNB). Channel Quality Indicator (CQI) is a measurement of the communication quality of wireless channels. CQI can be a value (or values) representing a measure of channel quality for a given channel. Typically, a high value CQI is indicative of a channel with high quality and vice versa. A CQI for a channel can be computed by making use of performance metric, such as a signal-to-noise ratio (SNR), signal-to-interference plus noise ratio (SINR), signal-to-noise plus distortion ratio (SNDR), and so forth of the channel. These values and others can be measured for a given channel and then used to compute a CQI for the channel.

Alternatively, the eNB may determine for itself the current channel quality according to the status of HARQ ACK/NACKs at its MAC layer. In other words, the RLC layer of the eNB indirectly estimates the channel condition from its lower layer processes, e.g. from ACK/NACKs of the HARQ protocol implemented at the MAC layer.

Still another possibility for the eNB to gather information on the channel quality, is to transmit a reference signal to the UE and wait for the processed response from the UE, from which the channel quality can be derived.

### LTE-Advanced

LTE has come to a mature state by now where changes on the specification are mostly limited to correction and bug fixes. In 3GGP, work on LTE-Advanced was started, wherein LTE-Advanced shall fulfill the 4G requirements as set by ITU (International Telecommunication Union). Amongst other things, 4G technologies shall support data rates up to 1 Gbps for stationary terminals

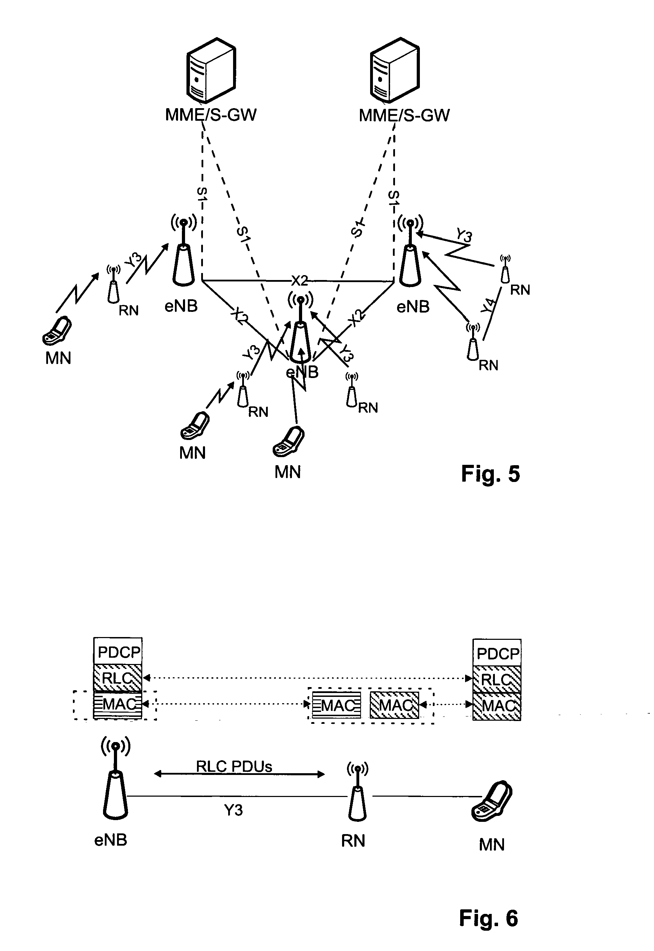

In order to achieve some of the targets, a relay node may be introduced between the eNodeB and the mobile node, as depicted in Fig. 5, preferably in hot spots (area in which the data rate drops due to a concentration of terminals, e.g. airport) or dead spots (area in the general coverage area of an eNB, in which however the signal of the eNB cannot be received). As apparent, the available coverage is extended by each relay node providing an additional small coverage area. A mobile node connected to such a relay node (RN) would receive data from the eNB via the relay node. Therefore, introducing a relay node may increase the data rate and signal coverage.

Furthermore, with respect to the protocol implementation, there could be some options that may allow to further reduce complexity and cost of the RN. For instance, the MAC and RLC entities may be separated with the objective of implementing a simpler and more economic RN.

This is exemplary depicted in Fig. 6. The inclined-striped RLC entity in the eNB and the inclined-striped MAC entity in the RN, are the peer entities of the corresponding RLC, MAC entities in the mobile node. The horizontally-striped MAC entities in eNB and RN are the peer entities, used for transport between eNB and RN, however do not relate to the inclined-striped MAC entities of eNB and UE.

The architectural option, in which the RLC entity stays at the base station and the MAC entity is placed at the relay node, leads to a series of problems, that will be explained in the following.

Due to the delay incurred by the additional link between the RLC entity and the MAC, the adaption of the RLC PDU size per TTI is not possible. As discussed above, the RLC PDU size is usually indicated by the MAC layer, which however is located at the relay node. Therefore, the MAC layer at the relay node needs to inform the RLC layer at the eNB, how to segment the RLC SDUs into RLC PDUs, i.e. which size each RLC PDU size has to have, according to the current channel conditions. In the time period which takes the segmentation indication to travel to the eNB, the eNB to generate the RLC PDU and the generated RLC PDU to travel back to the RN, the channel conditions might have changed; especially if the UE moves fast and thus the channel conditions change fast. In said case, the RLC PDU with a particular size may not be appropriate for being transmitted according to the current channel conditions. In other words, when the RLC PDU received from the eNB RLC entity is ready to be sent by the relay node, the channel conditions between RN and UE might have changed in such a way that the RLC PDU cannot be longer transmitted, as e.g. a different transport block size (TBS) would be required.

Nonetheless, the relay node would transmit the packet to the mobile node, which would not be able to decode correctly the content of the PDU and would thus need a re-transmission for said RLC PDU.

Putting it more specifically, the MAC entity in the relay node selects an appropriate MCS according to the currently known channel conditions between the RN and the UE, resulting in a corresponding segmentation of RLC SDUs into RLC PDUs with a particular size. The channel between the eNB and the RN is typically better than the one between RN and UE, since the RN would be usually not mobile and advantageously located to have a line-of-sight with the eNB. Therefore, the RLC PDU with a particular size may be successfully transmitted from the eNB to the RN, however might be too large for the current channel conditions between the RN and the UE. The current channel conditions would need a different, more robust, modulation and/or coding rate for the RLC PDUs in the RN, resulting in a different RLC PDU size, so as to be correctly transmitted to the UE.

Consequently, the eNB would eventually receive a status report from the UE indicating that the RLC PDUs have not been correctly decoded in the UE, leading to a retransmission of said RLC PDUs.

Therefore, the additional delay introduced by the relay node would result in an inefficient transmission of PDUs, and a waste of radio resources.

The above problem of the prior art has been discussed with regard to an initial transmission of a PDU, that is, a PDU transmitted for the first time from the eNB to the UE. Of course, the same problem arises for any re-transmission of a PDU performed by the eNB. Therefore, the same RLC PDU may be sent several times from the eNB to the RN until a successful transmission to the UE is achieved, with the consequent reception delay at the UE.

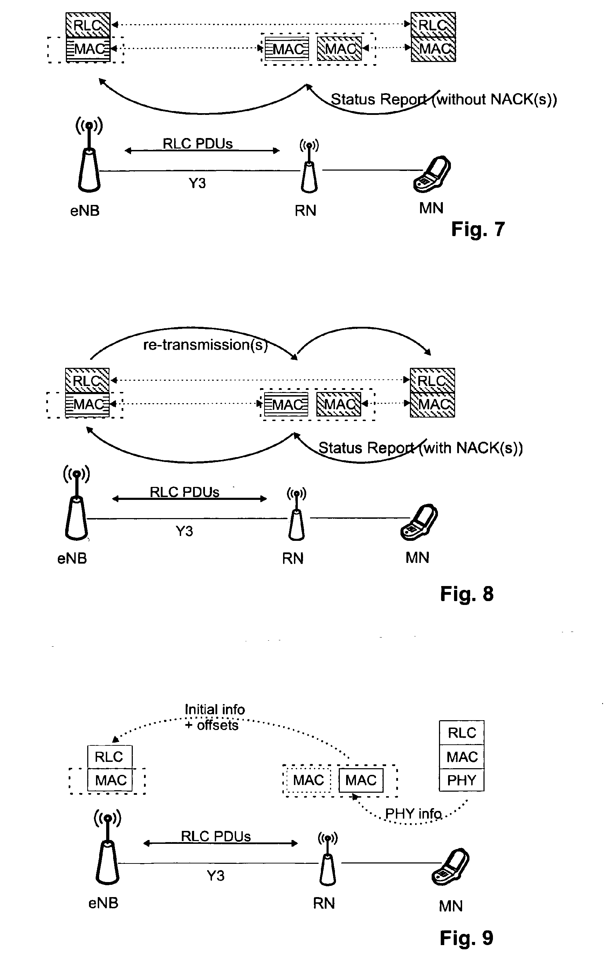

Another related problem will be discussed in the following. The actual re-transmission mechanism is also delayed due to the additional two hops between the RN and the eNB. Whereas Fig. 7 depicts the case where no re-transmission is necessary at all, in Fig. 8 the status report transmitted from the UE comprises NACKs for received RLC PDUs, thus requesting a re-transmission from the transmitter, the eNB, for said RLC PDUs. This problem is further aggravated in case the channel conditions change and a re-transmitted RLC PDU is transmitted unsuccessfully over the changed channel, leading to another re-transmission for said RLC PDU.

### SUMMARY OF THE INVENTION

Therefore, in view of the above problems in the state of the art, one object of the invention is to more efficiently transmit packet data units from the eNB to the mobile node over the relay node. Another object of the invention is to improve the re-transmission mechanism for packet data units transmitted between the eNB and the mobile node over the relay node.

At least one of the above objects is solved by the subject-matter of the independent claims. Advantageous embodiments of the invention are subject-matters of the dependent claims.

According to one aspect of the invention, the relay node is provided with functionality to determine whether the packet data unit, received from the radio resource control entity, the eNB, is appropriate for the current channel conditions to the mobile node. Consequently, in case the packet data unit is appropriate for the channel quality, same is transmitted to the mobile node. Conversely, the packet data unit is not transmitted to the mobile node, but the radio resource control entity is informed about the failed transmission, thus requesting to re-transmit the packet data unit in accordance with current channel conditions.

Advantageously, if the size of the packet data unit is smaller than or equal to a current maximum transport block size, the packet data unit is transmitted. The maximum transport block size is given by the channel condition, and indirectly by the highest possible MCS level that can be chosen to transmit the PDU. The higher the MCS level, the better the channel conditions have to be. In other words, the current channel conditions allow only up to a certain level of MCS to be used for transmission of the packet data unit to the UE, and thus up to a certain RLC PDU size. However, in case the RLC PDU size is too large, the previously decided modulation and coding would have to be used which is not possible due to the worsened channel conditions.

If the packet data unit size is larger than the maximum transport block size, the packet data unit most likely would not be successfully transmitted to the UE. Therefore, the packet data unit is not transmitted, but an imitated status report is generated at the RN instead and transmitted back to the radio resource control entity, thus requesting the re-transmission of the data of said packet data unit.

In order for the radio resource control entity to segment the RLC SDUs into RLC PDUs of a size that can indeed be transmitted also with the worsened channel conditions, it is necessary to inform the radio resource control entity accordingly. There are several alternatives for doing so.

The relay node regularly updates its knowledge on the current channel conditions, as already explained, e.g. by receiving CQI messages from the UE. The channel conditions may vary all the time to a greater or lesser extent. It would be possible for the RN to inform the radio resource control entity immediately about every change in channel conditions. This would however generate a lot of traffic over the air, and thus would waste resources, especially bearing in mind that sometimes the changes of channel conditions might have no impact on the segmentation of the RLC SDUs.

In order to save resources, it is possible to inform the radio resource control entity only in case the changes in channel condition are such (better or worse) that a different segmentation can be applied to the RLC SDUs; in other words, in case another MCS level may be applied to the transmission of RLC PDUs.

For some scenarios, it might be also beneficial to only report on a change of channel condition, if the change is for worse, i.e. an RLC PDU would not be appropriate for the new channel conditions, the RLC PDU size being too large.

There are also various alternatives for the actual content of the message indicating the new channel conditions. For instance, the message transmitted from the relay node to the radio resource control entity may indicate the QoS parameters received from the UE, possibly including a safety margin. Or, the message might comprise an indication as to the maximum size a RLC PDU is allowed to have, or the maximum MCS level which is allowed to be applied. Alternatively, the message could provide an offset value of the RLC PDU size or the MCS level. For instance, the offset value may be a byte size for directly reducing or increasing the maximum RLC PDU size. As apparent to a skilled person, there are various possibilities in said respect.

Said message for informing the radio resource control entity about the changed channel conditions or segmentation either accompanies or may be comprised in the request for re-transmission. For instance, the status report may contain a segmentation field indicating the new maximum RLC PDU size. A new dedicated message may alternatively be provided including either the above-mentioned offset of the RLC PDU size or of the MCS level or directly the maximum RLC PDU size or MCS level. Again, it is obvious to a skilled person that any combination of the above-described alternatives can also be applied for the purpose of changing the resulting RLC PDU size used in the radio resource control entity.

Accordingly, the radio resource control entity generates new packet data unit(s) comprising the data of the failed packet data unit, the new packet data units being appropriate for the new channel conditions, i.e. the packet data unit having the appropriate size.

Therefore, when thus transmitting a packet data unit from the radio resource control entity to the mobile node via the relay node, the packet data unit is only forwarded by the relay node in case the channel conditions allow to do so. If not, a re-transmission of said data is requested from the radio resource control entity. According to said aspect of the invention, the transmission of packet data units is efficiently performed, and radio resources are not wasted. Furthermore, a re-transmitted packet data unit reaches the UE in a shorter time, since the relay node itself may already trigger the re-transmission of the packet data unit, thus not waiting for the mobile node to send the status report.

Naturally, the above mentioned first aspect of the invention, not only applies to initial transmissions of a packet data unit to the mobile node, but also to any re-transmissions requested by the relay node with regard to said packet data unit. In more detail, after having checked that the initial transmission of the packet data unit is not appropriate for the current channel conditions, the re-transmitted packet data unit received from the radio resource control entity is again checked for appropriateness in the relay node before possibly forwarding same to the mobile node or requesting another re-transmission of the packet data unit, i.e. its data.

According to a second aspect of the invention, the relay node is provided with further functionality to handle requests for re-transmissions received from the mobile node. It should be noted beforehand that the first and second aspect of the invention are interrelated with one another, as will become apparent below, and may thus be used in combination or separately.

According to said second aspect of the invention, the mobile node when failing to decode a packet data unit correctly, requests the re-transmission of said packet data unit from the transmitter, the radio resource control entity. A status report indicating at least the not successfully decoded packet data unit is transmitted from the mobile node to the relay node, which receives said status report destined to the radio resource control entity. In the invention according to the second aspect, the status report is intercepted and scanned by the relay node to learn which packet data unit(s) are requested to be re-transmitted. The relay node then determines whether the unsuccessful packet data units are still available in its transport buffer or not, since the relay node can only carry out the re-transmission if the packet data unit is available in its buffer. If the unsuccessful packet data unit is not in the buffer of the relay node, the re-transmission of said unsuccessful packet data unit has to be performed by the radio resource control entity, which is requested/informed accordingly.

As already explained, each packet data unit transmitted from the relay node to the mobile node is checked for appropriateness to the current channel condition. Accordingly, before re-transmitting the unsuccessful packet data unit, that is still available in the transport buffer of the relay node, the relay node advantageously determines whether the size of the said packet data unit is smaller than or equal to a maximum transport block size given by the current conditions of the channel between the relay node and the mobile node. Only if the packet data unit is fit to be re-transmitted according to the current channel conditions, said packet data unit is indeed transmitted from the relay node. Otherwise, the packet data unit is not transmitted, and the re-transmission needs to be done by the radio resource control entity, which is requested/informed accordingly.

More specifically, in order to request the re-transmission from the radio resource control entity, the status report received from the mobile node is forwarded to the radio resource control entity including an indication for said unsuccessful packet data unit triggering a re-transmission by the radio resource control entity.

In any case, the intercepted status report is always forwarded from the relay node to the radio resource control entity, however needs to be adapted in case a re-transmission of one or more unsuccessful packet data units could be carried out by the relay node in the above-described way. By manipulating the status report according to the re-transmissions done by the relay node, the transmission and reception processes in the radio resource control entity and in the mobile node will not become un-synchronized.

Many issues explained for the first aspect of the invention also apply to the second aspect of the invention, such as the content of the message indicating the changed requirements of the channel, or how and when said message is transmitted.

According to said second aspect of the invention, the radio resource control entity is relieved of some burden stemming from re-transmissions requested from the mobile node, since the relay node performs same if possible. Furthermore, those re-transmissions performed by the relay node can be effected in a shorter time, since the signal delay between the relay node and the radio resource control entity is not present.

The invention provides a method for transmitting packet data units between a radio resource control entity (eNB) and a mobile node via a relay node. The relay node provides a communication channel between the radio resource control entity and the mobile node, and receives from the radio resource control entity a packet data unit destined to the mobile node. In case the size of the packet data unit is smaller than or equal to a current maximum transport block size for the channel between the relay node and the mobile node, the packet data unit is transmitted from the relay node to the mobile node. The current maximum transport block size is set according to the quality of the channel between the relay node and the mobile node. Conversely, in case the size of the packet data unit is larger than the current maximum transport block size, the radio resource control entity is requested to re-transmit the data of the packet data unit in one or more packet data units that can be transmitted via the channel to the mobile node.

According to an advantageous embodiment of the invention, the size of the re-transmitted packet data units is smaller than or equal to the current maximum transport block size for the channel.

In a further embodiment of the invention, in response to the request for re-transmission, the relay node receives one or more packet data units comprising said data. Then, in case the size of the one or more packet data units is smaller than or equal to the current maximum transport block size, the one or more packet data units are transmitted from the relay node to the mobile node.

Regarding a more detailed embodiment of the invention, the radio resource control entity is requested to re-transmit the data of the packet data unit by an imitated reception status report generated by the relay node. The imitated reception status report comprises a negative-acknowledgment for the packet data unit the size of which has been determined to be larger than the current maximum transport block size for the channel. Optinally, the imitated reception status report comprises non-acknowledgements for more than one packet data unit. The imitated reception status report is finally transmitted to the radio resource control entity.

According to an advantageous embodiment of the invention, the relay node intercepts a reception status report of a re-transmission protocol from the mobile node. The reception status report comprises at least information on packet data units transmitted from the radio resource control entity that have not been decoded successfully by the mobile node. It is then determined whether each of the unsuccessful packet data units is still available in the transport buffer of the relay node. for each of those unsuccessful packet data units being still available in the transport buffer of the relay node, in case the size of the unsuccessful packet data unit is smaller than or equal to the current maximum transport block size, the unsuccessful packet data unit are re-transmitted to the mobile node. For each of those unsuccessful packet data units, in case the packet data unit is not available in the transport buffer of the relay node or in case the size of the unsuccessful packet data unit is larger than the current maximum transport block size, the radio resource control entity is requested to re-transmit the data of the unsuccessful packet data unit in one or more packet data units that can be transmitted via the channel to the mobile node.

Referring now to a different embodiment of the invention, wherein the radio resource control entity is requested to re-transmit the data of the unsuccessful packet data units by adapting the received reception status report according to the re-transmissions of the unsuccessful packet data units to the mobile node executed by the relay node. The adapted reception status report is then transmitted from the relay node to the radio resource control entity.

With regard to another embodiment of the invention, in case the received reception status report does not comprise information on packet data units transmitted from the radio resource control entity not successfully decoded at the mobile node, the relay node forwards the received status report unchanged to the radio resource control entity.

In a further embodiment of the invention, upon receiving the reception status report, those packet data units that have been successfully decoded by the mobile node are deleted from the transport buffer of the relay node. Upon requesting the re-transmission of the unsuccessful packet data units, those packet data units the size of which is larger than the current maximum transport block size are deleted from the transport buffer of the relay node.

According a more detailed embodiment of the invention, the current maximum transport block size for the channel is updated regularly based on channel information received from the mobile node and including a channel quality indicator or based on messages received by lower layer processes.

In a further embodiment of the invention, an indication on the quality of the channel between the relay node and the mobile node is transmitted to the radio resource control entity for enabling the radio resource control entity to re-transmit the data in one or more packet data units that can be transmitted via the channel to the mobile node.

Regarding a different embodiment of the invention, the radio resource control entity or the relay node assigns a weight to each packet data unit transmitted from the radio resource control entity, according to its size. Furthermore, a weight threshold is determined according to the current maximum transport block size for the channel. Then, the weight of each packet data unit is compared to the weight threshold to determine whether the size of the packet data unit is smaller than, equal to or larger than the current maximum transport block size for the channel.

According to a more deteiled embodiment of the invention, each packet data unit is extended by at least one bit indicating its assigned weight.

In an embodiment of the invention the packet data units belong to the Radio Link Control, RLC, layer.

Now referring to a more advantageous embodiment of the invention, before transmitting the first packet data unit from the radio resource control entity to the mobile node, a channel quality information is transmitted from the mobile node via the relay node to the radio resource control entity. Then, the radio resource control entity decides on the intended size of the packet data units, based on the received channel quality information.

Regarding another embodiment of the invention, upon receiving in the relay node the channel quality information from the mobile node, it is determined whether to change the maximum transport block size. In case the maximum transport block is changed, informing the radio resource control entity about the change of the maximum transport block size.

According to a further embodiment of the invention, the relay node monitors the channel quality between the relay node and the mobile node. In case a worsening trend of the channel quality is determined by the relay node, all packet data units stored in a buffer of the relay node are transmitted to the mobile node. Optionally, the packet data units having the smallest size are transmitted to the mobile node first.

In a more detailed embodiment of the invention, the relay node requests a status report from the mobile node, in case
the transport buffer of the relay node gets full, or
the arrival of a status report from the mobile node fails, or
one or more packet data units are to be deleted from the transport buffer of the relay node.

The present invention further provides a relay node for forwarding packet data units received from a radio resource control entity to a mobile node. The relay node provides a communication channel between the radio resource control entity and the mobile node. A receiver of the relay node receives from the radio resource control entity a packet data unit destined to the mobile node. In case the size of the packet data unit is determined by a processor to be smaller than or equal to a current maximum transport block size for the channel between the relay node and the mobile node, a transmitter transmits the packet data unit to the mobile node. The current maximum transport block size is set by the processor according to the quality of the channel between the relay node and the mobile node. In case the size of the packet data unit is larger than the current maximum transport block size, the transmitter requests the radio resource control entity to re-transmit the data of the packet data unit in one or more packet data units that can be transmitted via the channel to the mobile node.

According to a further embodiment of the invention, the receiver of the relay node intercepts a reception status report of a re-transmission protocol from the mobile node. The reception status report comprises at least information on packet data units transmitted from the radio resource control entity that have not been decoded successfully by the mobile node. The processor of the relay node determines whether each of the unsuccessful packet data units is still available in a transport buffer of the relay node. For each of those unsuccessful packet data units being still available in the transport buffer of the relay node, in case the size of the unsuccessful packet data unit is determined by the processor to be smaller than or equal to the current maximum transport block size, the transmitter re-transmits the unsuccessful packet data unit to the mobile node. For each of those unsuccessful packet data units, in case the packet data unit is not available in the transport buffer or in case the size of the unsuccessful packet data unit is larger than the current maximum transport block size, the transmitter requests the radio resource control entity to re-transmit the data of the unsuccessful packet data unit in one or more packet data units that can be transmitted via the channel to the mobile node.

Regarding to another embodiment of the invention, the processor of the realy node generates an imitated reception status report comprising a negative-acknowledgment for the packet data unit the size of which has been determined by the processor to be larger than the current maximum transport block size for the channel. The imitated reception status report optionally comprises non-acknowledgements for more than one packet data unit. The transmitter of the relay node then transmits the imitated reception status report to the radio resource control entity.

The present invention further comprises a radio resource control entity for transmitting packet data units via a relay node to a mobile node, wherein the relay node provides a communication channel between the radio resource control entity and the mobile node. A receiver of the radio resource control entity receives channel quality information, on which basis a processor decides on the size of each packet data unit. The processor then generates the packet data units according to the decided size, and a transmitter transmits the generated packet data units to the mobile node via the relay node.

According to an advantageous embodiment of the invention, the receiver of the radio resource control entity receives new channel quality information, and the processor is further adapted to adjust the decided size of each packet data unit according to the received new channel quality information.

Regarding a further embodiment of the invention, the processor of the radio resource control entity assigns a weight to each packet data unit according to its size, and adds the assigned weight to the packet data unit, before the transmitter transmits the packet data unit together with the added weight to the mobile node via the relay node.

### BRIEF DESCRIPTION OF THE FIGURES

In the following the invention is described in more detail with reference to the attached figures and drawings.
- **Fig. 1**: illustrates the high-level architecture of an LTE system,
- **Fig. 2**: illustrates the relationship between a layer packet data unit and a service data unit,
- **Fig. 3**: shows the layers and the transport between the mobile node and an eNodeB,
- **Fig. 4**: illustrates the segmentation of an RLC SDU into several RLC PDUs,
- **Fig. 5**: shows the network deployment in an LTE-Advanced system having relay nodes as intermediary entities,
- **Fig. 6**: illustrates some layers active between the mobile node, the relay node and the eNodeB,
- **Fig. 7**: shows the transmission of a status report without NACKs from the mobile node to the eNB,
- **Fig. 8**: shows the transmission of a status report with NACKs from the mobile node to the eNB, leading to re-transmissions by the eNB,
- **Fig. 9**: shows the transmission of parameters at session start-up according to one embodiment of the invention,
- **Fig. 10**: shows the transmission of a status report with NACKs from the mobile node to the eNB via the relay node, and the corresponding re-transmissions by the relay node and the eNB according to another embodiment of the invention, and
- **Fig. 11**: is a signaling diagram illustrating an embodiment of the invention, in which RLC packet data units are transmitted from the eNB to the UE leading to re-transmissions by the RN and the eNB.

### DETAILED DESCRIPTION

### Definitions

In the following a definition of a few terms frequently used in this document will be provided.

A **mobile node** is a physical entity within a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes.

The term **Status Report** used in the description of this invention refers to a message transmitted from a receiver to a transmitter of packet data units for acknowledging the correct decoding of said packet data units. In more detail, a Status Report may contain information for the transmitter regarding one or several packet data units for indicating whether each of said packet data units has been decoded correctly in the receiver or not. An indication that a packet data unit has not been decoded correctly may be implicitly taken by the receiver as a request for re-transmission of said packet data unit.

An **Imitated or Fake Status Report** refers to the above-described **Status Report,** however is generated by an entity on behalf of the receiver, i.e. the Status Report is falsified to look as if coming from the receiver.

A **Relay Node** is a physical entity in a communication network. One node may have several functional entities. A functional entity refers to a software or hardware module that implements and/or offers a predetermined set of functions to other functional entities of a node or the network. Nodes may have one or more interfaces that attach the node to a communication facility or medium over which nodes can communicate. Similarly, a network entity may have a logical interface attaching the functional entity to a communication facility or medium over it may communicate with other functional entities or correspondent nodes. In particular, a Relay Node is in communication with a (e)NodeB and provides an extended coverage area for a mobile node.

**Transport Block Size** (TBS) is determined by the MAC scheduler according to the possible MCS level and the possible resource allocation (PRB: physical resource blocks) available for a UE. This calculation is done according to Table 7.1.7.2.1-1: Transport block size table, in 3GPP specification 36.213 in section 7.1.7 and further.

The following paragraphs will describe various embodiments of the invention. For exemplary purposes only, most of the embodiments are outlined in relation to a communication system according to LTE-Advanced as discussed in the Technical Background section above. Nonetheless, the principles of the invention may apply to other communication systems as well, as can be appreciated by a skilled person.

Fig. 9 illustrates the start of a communication session of a UE in an LTE-Advanced system. A relay node is provided between the eNB and the UE, and accordingly data received from a service provider or another correspondent node is transmitted from the eNB via the RN to the mobile node.

As already discussed, it is necessary for the RLC layer in the eNB to segment the PDUs of upper layers (e.g. IP layer) into RLC PDUs having an appropriate size according to the current channel conditions. As apparent from Fig. 9, the MAC layer of the relay node receives a physical information (PHY info) message from the Physical Layer of the mobile node. According to one embodiment of the invention, the PHY info message comprises a channel quality indicator (CQI), which is a value indicating the quality of the channel. In more detail, the CQI comprises a modulation order and coding rate, according to Table 7.2.3-1 in the 3GPP specification 36.213. Using the indicated modulation order and coding rate, and mapping same to Tables 7.1.7.1-1 and Table 7.1.7.2.1-1 of 3GPP spec 36.213, it is possible to determine the maximum transport block size that may be transmitted.

The PHY information may alternatively contain other information indicating the channel quality. In order to inform the eNB about the channel conditions, in one embodiment of the invention, an Initial Info message is transmitted to the RLC layer of the eNB, for starting the session. Depending on the kind of information the RN receives from the MN, regarding the quality of the channel between the RN and the MN, the Initial Info message may contain different information, such as a Logical Channel Priorities, QoS class of UE, Scheduling Strategy utilized at the RN scheduler, Traffic conditions (i.e. Interference); all these factor affect the size of the transport block, hence the RLC PDU size. Alternatively, the Initial Info message may just contain the information received in the PHY info message, be it a CQI or other information.

However, the RN may also process the received channel quality information. For example, the RN may transform the CQI into a maximum transport block size, with or without considering a safety margin. More specifically, in case the CQI specifies a maximum transport block size of 500 bytes, the RN may signal a maximum transport block size of 400 bytes to the eNB.

In the prior art, the MAC layer indicates to the RLC layer which RLC PDU size should be segmented. According to this embodiment of the invention, the RLC layer may decide itself on the RLC PDU size based on the content of the Initial Info message received from the relay node. Thus, at the beginning of the communication session, the RLC entity decides by itself on the RLC PDU size.

Later during the session, the RLC PDU size may be adjusted via offset indications as will become apparent from the description below. The offset indication may also depend on several factors such as channel conditions, QoS requirements, etc.

It should be however noted that the sizes of the RLC PDUs won't be identical, because besides the criterion of the channel conditions, the RLC PDU size also depends on the RLC SDU size, padding, QoS, application type (e.g. VoIP) etc. Additionally, a UE may have several higher layers sessions running at once, which generate different PDU sizes that must be handled by the lower layers.

Accordingly, the eNB starts transmitting to the MN several packet data units in a transmission window, for which a particular RLC PDU size has been decided by the RLC layer of the eNB, based on the content of the Initial Info message received from the relay node. In more detail, the RLC layer performs segmentation based on the decided RLC PDU size. According to the RLC PDU size received at the MAC layer, an appropriate MCS level is selected at the MAC layer for transmission. The packet data units in the first transmission window transmitted from the eNB are then received in the RN.

Correspondingly, there is a time period between the MAC layer of the RN transmitting the Initial Info to the eNB and the RLC PDUs arriving at the RN. In said time period, the Initial Info message is received and processed in the eNB, a RLC PDU size is decided, the RLC PDUs for the first transmission window are segmented, and the RLC PDUs are received at the RN with the intention to be forwarded to the UE.

However, in said time period the channel conditions between RN and UE may have changed, such that the RLC PDU size decided on by the RLC layer of the eNB is no longer appropriate. The RN is regularly determining the current channel conditions, based on CQIs that are transmitted from the UE in pre-determined intervals or in response to requests by the RN.

The RN is provided with functionality for determining whether the RLC PDU size is appropriate for the current channel conditions. Since it is assumed that the channel conditions have worsened considerably, the RN determines that the received RLC PDUs are not transmittable over the current link to the UE. Therefore, the RN will generate a fake status report, comprising negative-acknowledgments for those data packets that were determined to not be transmittable over the current link to the MN. This imitated status report is generated as being from the UE, and thus can deceive the eNB. Consequently, the eNB receiving the fake status report from the RN, determines that the status report has been transmitted from the UE, for requesting the re-transmission of said unsuccessful RLC PDUs.

In order to avoid that the eNB again transmits RLC PDUs with a wrong size, it is necessary to inform the RLC layer of the eNB about the change of conditions. As already mentioned, in one embodiment of the invention an offset value is transmitted from the RN to the eNB. The transmission of said offset value is triggered by a change of channel conditions. The offset value may be transmitted for every change of channel conditions, for only a change of channel conditions leading to a different allowable transport block size, or for only a worsening of channel conditions.

The offset value can be inserted into a dedicated message, or may be included into the fake status report transmitted to the eNB for requesting the re-transmissions.

Since the eNB knows about the changed channel conditions through the received offset values, the RLC PDU size will be decided anew in accordance therewith. The data of the unsuccessful RLC PDUs will be segmented into RLC PDUs with a different (smaller) size, and then transmitted to the UE.

The RN receives said re-transmitted RLC PDUs and again determines whether same can be transmitted over the channel with the current channel conditions. In case the RLC PDU size is too large, another fake status report is generated on behalf of the mobile node, and thus another re-transmission is requested. Conversely, in case the RLC PDU size is smaller than a maximum transport block size, the RLC PDUs are transmitted from the RN to the UE.

The above embodiments have been explained with regard to the first RLC PDUs transmitted from the eNB. Naturally, the above-described principles apply to any initial transmission done by the eNB.

Furthermore, in the following another embodiment of the invention will be explained in detail. It is assumed that RLC PDUs transmitted from the RN to the UE cannot be correctly decoded by the UE, and thus would need a re-transmission. Though the previously-described embodiments of the invention try to prevent that RLC PDUs are transmitted over the channel to the UE when the channel conditions are not good enough for the size of the RLC PDUs, it is still possible that some of the RLC PDUs nonetheless cannot be correctly decoded by the UE.

In said case, after the UE has finished processing the received RLC PDUs, the UE generates a status report for one or more RLC PDUs that could not be correctly decoded. It should be noted that the network can setup a variety of triggers in order for the UE to generate a status report.

Accordingly, the status report may contain negative-acknowledgements for those unsuccessful PDUs, or may in addition or alternatively comprise acknowledgements for those packet data units successfully decoded. In any case, it is possible to deduce which of the PDUs have been decoded correctly by the UE and which of them not.

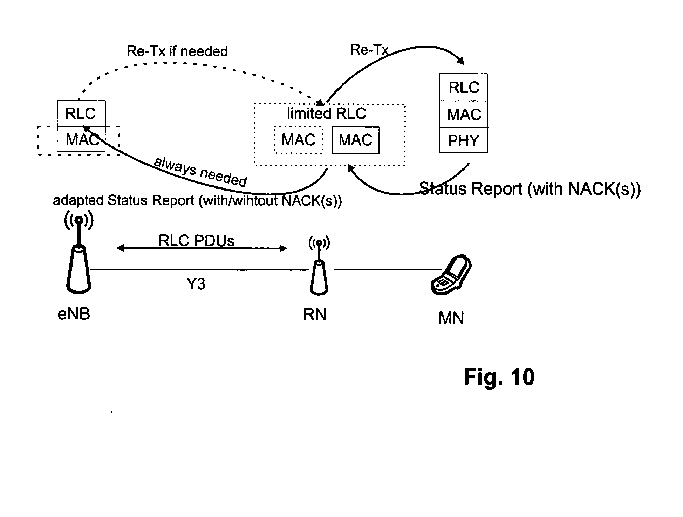

As can be seen from Fig. 10, after generating the status report, same is transmitted to the RN for being forwarded to the eNB, so that corresponding re-transmissions are requested. However, the RN intercepts the status report and analyses it to determine which RLC PDUs are to be re-transmitted and which not. In case the status report only indicates that all RLC PDUs have been correctly decoded by the UE, the status report is forwarded unchanged to the eNB so that the eNB RLC layer advances its transmission window in a synchronized manner with the UE. At the same time, those RLC PDUs, that have been successfully received by the UE, can be deleted from the transport buffer of the RN.

However, in case the status report comprises one or more negative-acknowledgements for RLC PDUs, the status report is not forwarded for the moment. Instead, the limited RLC functionality of the RN tries to take over the re-transmission of said unsuccessful RLC PDUs on behalf of the eNB.

In more detail, since the RN is the one entity that has the direct link over the air to the terminal, the RN can smartly decide whether it makes sense to perform a re-transmission in order to not waste precious air link resources. The RN needs to verify whether the missing RLC PDUs are still available in its transport buffer. Only if same are still available to the RN from its buffer, the RN can perform the re-transmission for said RLC PDU. If none of the RLC PDUs are in the transport buffer of the RN, the status report is forwarded unchanged to the eNB, since in said case the eNB has to perform the retransmissions.

For those RLC PDUs which are still stored in the transport buffer of the UE, the RN determines whether their PDU sizes are smaller than, equal to or larger than a maximum transport block size of the MAC layer given by the current channel conditions. In other words, the RN determines whether the RLC PDUs, which have been segmented according to a particular MCS level in accordance with previous channel conditions, are still fit to be transmitted with the current channel conditions to the UE.

In case the RLC PDU fits into the MAC transport block, the NACKed RLC PDUs are re-transmitted by the RN as soon as possible. Accordingly, those re-transmitted RLC PDUs are kept in the transport buffer of the RN, while the acknowledged RLC PDUs are flushed.

If the RLC PDU cannot fit in the MAC transport block due to a change in channel conditions, the RN cannot perform the re-transmission and thus must request a re-transmission from the eNB RLC layer.

The intercepted status report is synchronized with the performed re-transmissions of NACKed RLC PDUs. In other words, the intercepted status report is amended to only include negative-acknowledgments for those RLC PDUs for which the RN could not perform a re-transmission itself. The amended status report is then transmitted from the RN to the eNB for triggering the necessary re-transmissions.

Again it is necessary for the eNB to learn about the new channel conditions so as to adjust the RLC PDU size accordingly. As already hinted at before, there are several options to achieve said goal. One is to include a segmentation field into the status report, directly indicating the necessary RLC PDU size. Another possibility is to transmit an offset value in the status report. Alternatively, a dedicated message can be transmitted to the eNB. There is a tradeoff between the delay from when the eNB can correctly segment new RLC PDUs or the waste of radio resources spent on an additional extra message for said purpose. A skilled person is able to consider what is more important. In detail, though the RN would already know about worsening of channel condition that leads to unsuccessfull transmissions, he might still wait for a status report to arrive from the UE, since it might be beneficial to save resources even at the cost of the eNB further segmenting RLC PDUs with a larger RLC PDU size than allowable.

By intercepting and manipulating the status report, the RN makes sure that the RLC transmission windows will not become un-synchronized at the eNB and the UE, while speeding up the re-transmissions.

Therefore, as apparent from Fig. 10, the re-transmissions at the eNB are only performed when necessary, but can often be avoided by the RN taking over in said respect as explained above.

In a more detailed embodiment of the invention, a weighting mechanism is implemented in order to determine whether the RLC PDU can be transmitted according to the current channel conditions. Each RLC PDU is assigned a particular weight, depending on its size. Furthermore, a threshold weight is determined based on the conditions of the channel between the relay node and the mobile node. The threshold weight is also based on a transport block size that can be transmitted over the channel according to current conditions. Then, the threshold weight is regularly updated using incoming information on channel conditions, as explained before, e.g. by CQIs.

One option is to assign the weight to each RLC PDU already at the eNB, in which case a tag is added to each RLC PDU indicating its corresponding weight. This relieves the RN from assigning the weights, however wastes more resources on the air link between eNB and RN.

Alternatively, after receiving the RLC PDUs, each RLC PDU is assigned a weight by the RN, and a corresponding tag is internally added to the weighted RLC PDU. In this case, the RN needs the corresponding functionality, however the RLC PDUs are not transmitted with the additional tag over the air link, not wasting air resources.

Each RLC PDU received in the RN eventually is assigned a weight corresponding to its size, and the assigned weight is compared to the weight threshold. If the weight of the RLC PDU exceeds the threshold, the RN cannot fit the RLC PDU into the transport block of the MAC layer, and then the RN doesn't even send the PDU over the air to the UE, since it will most likely fail and waste air resources.

Correspondingly, if the weight of a RLC PDU is lower than the threshold, the RLC PDU is transmitted over the air to the UE.

Now referring to the re-transmission performed by the RN, the RLC PDUs have been stored in the transport buffer including the weight tag, and thus can be immediately compared against the current weight threshold, in case the RN is to take over a re-transmission of said RLC PDU.

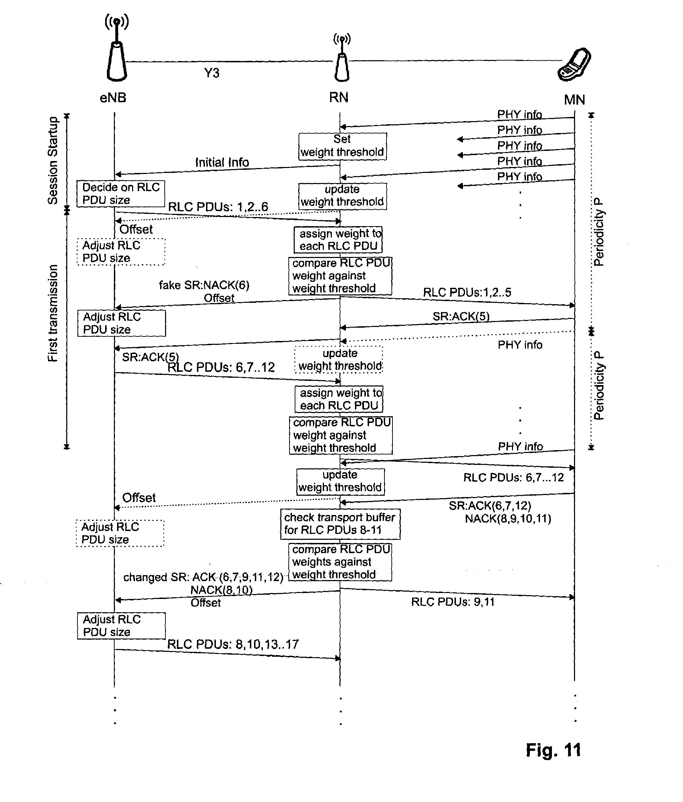

In the following, the embodiment of the invention using the weighting mechanism will be explained thoroughly with reference to Fig. 11. It should be noted that the signaling diagram of Fig. 11 only illustrates the most important steps and messages for the embodiment of the invention. Furthermore, Fig. 11 should be understood as an example and not as limiting the scope of the invention.

At the beginning of a communication session, a PHY info message, including a channel quality indication, is transmitted from the MN to the RN, which, upon receiving it, may set a weight threshold. In addition, the RN processes the received channel quality indication of the PHY info message, and generates and transmits an Initial info message to the eNB, in order for the eNB to decide on the size of the RLC PDUs. Optionally, the information of the Initial info message might include a margin, so that even if a worsen of the channel occurs, the generated RLC PDUs wouldn't exceed the weight threshold immediately.

As apparent from Fig. 11, the MN keeps transmitting the PHY info message at regular intervals so as to keep the RN up to date about the channel conditions between RN and MN. At one point it is assumed that the channel conditions reported with the PHY info message have changed so much that the weight threshold is to be updated in the RN. Optionally, immediately upon realizing that the weight threshold has been changed, an dedicated offset message is transmitted from the RN to the eNB, so that the eNB may adjust the RLC PDU size, according to the changed weight threshold.

However, before the eNB is even aware of the change in channel conditions, the first RLC PDUs 1-6 are segmented with the previously decided RLC PDU size and transmitted to the RN, which assigns a weight to each RLC PDU and stores same together with a weight tag in its transport buffer. It should be noted that though a RLC PDU size has been decided by the RLC layer, the size of generated RLC PDUs is not always the same, since the size of a particular RLC PDU depends on other factors, such as QoS requirements, application type or the RLC SDU size.

Subsequently, each RLC PDU weight is compared against the current weight threshold to decide on whether to transmit the RLC PDU or request a re-transmission from the eNB. It is assumed that only RLC PDU 6 is determined to exceed the weight threshold, while RLC PDUs 1 to 5, still can be transmitted to the UE in spite of the changed channel conditions and weight threshold.

Since RLC PDU 6 does not have the appropriate size and the limited RLC layer of the RN cannot re-segment the RLC PDU 6, it is necessary to request the re-transmission of the RLC PDU 6 from the eNB. For said purpose, a fake Status Report may be generated at the RN, the fake Status Report generated on behalf of the UE and thus for the eNB deceivingly appearing to be from the UE. The fake SR comprises a negative acknowledgment for RLC PDU 6 and an offset value for adjusting the RLC PDU size at the eNB. Alternatively, instead of generating and transmitting the fake Status Report, the RN may also wait for receiving a Status Report from the UE (in this case SR:ACK(5)), which then can be adapted to include the negative acknowledgment for RLC PDU 6 and the offset value.

However, before the RN may transmit further RLC PDUs, it is necessary for the RN to receive ACKs for some of the already transmitted RLC PDUs. In more detail, it is assumed that in one transmission window six RLC PDUs are transmitted. In order to synchronize the transmission and receiving windows at the eNB and UE respectively, the eNB needs to keep (re-)transmitting the RLC PDUs until a positive acknowledgment is received from the UE. Then, depending on the number of acknowledgments, the transmission window may be shifted to the next RLC PDUs. In this case, the UE correctly receives RLC PDUs 1-5, and correspondingly acknowledges the receipt of same to the eNB. Considering that RLC PDU 6 needs to be re-transmitted to the UE and that the next transmission window may now contain seven RLC PDUs, the remaining six RLC PDUs for the transmission window are RLC PDUs 7-12.

According to the adjusted RLC PDU size, the eNB transmits at the next transmission window the RLC PDUs 6-12. Since the RLC PDU size has changed (become smaller), the data of previous RLC PDU 6 has been segmented differently with part of said data being segmented into RLC PDU 7, for example.

As before, each RLC PDU is assigned a weight according to its size, and stored in the RN's buffer memory. The weight of each RLC PDU is then first compared to the current weight threshold before actually being transmitted. Since the weight threshold has not changed in the meantime, all RLC PDUS 6-12 are determined to be smaller than the threshold, and thus are transmitted to the UE.

While the RLC PDUs 6-12 are transmitted to the UE, a change of channel conditions leads to an adjustment of the weight threshold at the RN. This change of channel conditions might either be signaled immediately to the eNB, or at a later point in time together with the status report.

It is further assumed, that RLC PDUs 8-11 could not be decoded correctly by the UE, and the UE correspondingly generates and transmits a status report to the RN. Said status report is intercepted by the RN, and not yet forwarded to the eNB. Instead, the transport buffer of the RN is checked for RLC PDUs 8-11. RLC PDUs 9-11 are still available in the RN's buffer, however RLC PDU 8 was already flushed.

The stored RLC PDUs 9-11 still have their weight tags, which are compared to the current threshold. The RN determines that RLC PDUs 9 and 11 can be transmitted to the UE with the current channel conditions, contrary to RLC PDU 10 whose weight is determined to be larger than the weight threshold.

Accordingly, the received status report is adapted in that the NACKs for 9 and 11 are eliminated and transformed into ACKs since the re-transmission for same is taken over by the RN. Further, the NACKs for the RLC PDUs 8 and 10 remain, since the first wasn't even available to the RN and the latter was too large for the worsened channel conditions. The status report is further adapted to carry the offset for changing the RLC PDU size.

Upon receiving the status report, the eNB proceeds with the transmission window. In detail, in the transmission window RLC PDUs 8 and 10 need to be re-transmitted, wherein the remaining 5 RLC PDUs are 13-17.

In Fig. 11 Periodicity P is depicted with a dashed arrow in order to illustrate an alternative way for the UE to signal a change of channel conditions to the RN. According to a periodicity, configurable (e.g. each 10ms) and adjustable, the UE transmits a PHY info message to the RN, that in turn, upon receiving said PHY info message, always updates the weight threshold, independent of whether the change of condition is small or large.

In the following further embodiments of the invention relating to different improvements will be discussed in detail.

The trend of the channel quality is monitored in order to anticipate a channel getting too bad. According to one embodiment of the invention, the RN will send all RLC PDUs in its transport buffer over the air to the UE before the channel quality worsens such that the RLC PDU weights exceed the current weight threshold. In other words, the packets with a lower weight are all transmitted immediately before the channel conditions become such that later the RN will not be able to transmit them. This behaviour generates additional traffic on the link between RN and UE, however improves the probability that the RLC PDUs are received correctly at the UE.

Advantageously, when transmitting all RLC PDUs from the RN's transport buffer to the UE, the PDUs with the smaller weight are transmitted first and those PDUs having a larger weight are either sent afterwards or not at all.

During a communication session there might be the problem that the transport buffer of the RN might get full and thus some data needs to be deleted. In particular, in order to maintain the RN as simple and low-cost as possible, the amount of buffer will probably be quite limited in a relay node. Furthermore, the RN must keep in its transport buffer all RLC PDUs that have not yet been acknowledged by the UE via a status report. Thus, the transport buffer might easily get full, especially in case the status report from the UE is delayed for whatever reason.

According to one embodiment of the invention, this problem is solved by having the RN independently poll a status report from the UE for particular or all RLC PDUs in the RN's buffer. In more detail, each RLC PDU usually has a polling field of 1 bit, which, when set, triggers the UE to generate a SR for all received RLC PDUs from the last SR onward until and including the RLC PDU comprising said polling bit. Therefore, the RN merely has to set the polling field of an RLC PDU which is sent anyway to the UE, in order to trigger the UE to generate and transmit a SR.

The timing for the SR polling by the RN might be based on the status of its buffers, the time-to-live (TLV) of old packets in its transport buffer and/or on the arrival of a SR from the UE. For example, when some TLV value is reached, the RN can poll immediately the UE to transmit a SR. This SR will be received at the RN, and will then allow the RN to process some of its buffered RLC PDUs.

This polling from the RN is completely unknown to the eNB and can be tailored to the specific buffer requirements of the RN.

According to another solution to the above-posed problem, when some TLV threshold value is reached, the RN may re-transmit these old PDUs independent from the reception of any status report, in order to make sure the UE receives these PDUs. This may also be done even before the status report is received at the RN.

If the PDU has been already successfully received by the UE, then the sequence number of the PDU will either fall outside the reception window at the UE or be a duplicate in the reception window and will be safely discarded by the UE.

If the previous transmission of the PDU was lost over the air, then the UE will probably be able to successfully receive and acknowledge the PDU in the next SR.

A message sequence for the processing at the RN according to various embodiments of the invention will be presented below:
- RN compile information about PHY channel quality by reports from UE (e.g. CQI) or by itself according to status of HARQ ACK/NACK at MAC level.
- RN will establish a threshold value to reference the weights of the PDUs received from eNB. This threshold is related to the channel conditions dependent transport block size (TBS).
   - This threshold will be updated with changes indicated by channel quality reports
   - These quality reports are (a)periodically received by RN
- RN will send indication to eNB so eNB will setup its RLC PDUs sizes according to weight threshold indication by RN.
- RN will receive RLC PDUs sent by eNB.
   - **For PDU initial transmission** RN will evaluate the weight of every RLC PDU on its buffer against the threshold to see whether it can send it over the air.
   - If the weight is NOT enough to overcome the threshold, i.e. stay below the threshold, the RN will send it over the air.
   - If the weight is too much and overcomes the threshold, the RN will NOT attempt to send it over the air.
   - RN will generate a substitute SR indicating a NACK for that RLC PDU and send it to eNB with indication for segmentation for that PDU and eventual change of RLC PDU size indicator.
   **- After transmission of a certain amount of PDUs** RN will receive from the UE a status report when the UE is polled at RLC level by the eNB
   - The RN can identify the status report
   - RN will identify if there are any NACKs PDU in the report
   **- For retransmissions of packets NACKed from the UE**
   - if NACK PDUs in the SR are still in the buffer, the RN will attempt to retransmit based on the threshold and the weight of the PDU
   - if the RN cannot retransmit the packet it will forward the SR to the eNB with a NACK indicated for those PDUs that the RN could not retransmit
   - the RN will also indicate to the eNB to change RLC PDU size since new threshold does not allow for packets with current weight.
   - After retransmissions are all successfully processed, the RN could send a SR with all ACK PDUs to the eNB instead of waiting for SR triggered by eNB. By doing so the RN would reduce the time the eNB it waits for SR and hence reduce interference to higher layer operations.

In the previous paragraphs various embodiments of the invention and variations thereof have been described.. It would be appreciated by a person skilled in the art that numerous variations and/or modifications may be made to the present invention as shown in the specific embodiments without departing from the spirit or scope of the invention as broadly described.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for transmitting packet data units between a radio resource control entity (eNB) and a mobile node via a relay node, the relay node providing a communication channel between the radio resource control entity and the mobile node, the method comprising the following steps:
receiving in the relay node from the radio resource control entity a packet data unit destined to the mobile node,
in case the size of the packet data unit is smaller than or equal to a current maximum transport block size for the channel between the relay node and the mobile node, transmitting the packet data unit from the relay node to the mobile node, wherein the current maximum transport block size is set according to the quality of the channel between the relay node and the mobile node,and
in case the size of the packet data unit is larger than the current maximum transport block size, requesting the radio resource control entity to re-transmit the data of the packet data unit in one or more packet data units that can be transmitted via the channel to the mobile node.

2. The method for transmitting packet data units according to claim 1 , further comprising the steps of:
in response to the request for re-transmission, receiving in the relay node one or more packet data units comprising said data, wherein the size of the re-transmitted packet data units is smaller than or equal to the current maximum transport block size for the channel, and
in case the size of the one or more packet data units is smaller than or equal to the current maximum transport block size, transmitting the one or more packet data units from the relay node to the mobile node.

3. The method for transmitting packet data units according to claim 1 or 2, wherein the step of requesting the radio resource control entity to re-transmit the data of the packet data unit comprises:
generating by the relay node an imitated reception status report comprising a negative-acknowledgment for the packet data unit the size of which has been determined to be larger than the current maximum transport block size for the channel, wherein the imitated reception status report optionally comprises non-acknowledgements for more than one packet data unit, and
transmitting the imitated reception status report to the radio resource control entity.

4. The method for transmitting packet data units according to one of claims 1 to 3, the method further comprising the following steps:
intercepting by the relay node a reception status report of a re-transmission protocol from the mobile node, the reception status report comprising at least information on packet data units transmitted from the radio resource control entity that have not been decoded successfully by the mobile node,
determining whether each of the unsuccessful packet data units is still available in the transport buffer of the relay node,
for each of those unsuccessful packet data units being still available in the transport buffer of the relay node, in case the size of the unsuccessful packet data unit is smaller than or equal to the current maximum transport block size, re-transmitting the unsuccessful packet data unit to the mobile node,
for each of those unsuccessful packet data units, in case the packet data unit is not available in the transport buffer of the relay node or in case the size of the unsuccessful packet data unit is larger than the current maximum transport block size, requesting the radio resource control entity to re-transmit the data of the unsuccessful packet data unit in one or more packet data units that can be transmitted via the channel to the mobile node.

5. The method for transmitting packet data units according to claim 4, wherein the step of requesting the radio resource control entity to re-transmit the data of the unsuccessful packet data units comprises:
adapting the received reception status report according to the re-transmissions of the unsuccessful packet data units to the mobile node executed by the relay node, and
transmitting the adapted reception status report from the relay node to the radio resource control entity.

6. The method for transmitting packet data units according to one of claims 1 to 5, wherein the current maximum transport block size for the channel is updated regularly based on channel information, received from the mobile node and including a channel quality indicator, or based on messages received by lower layer processes.

7. The method for transmitting packet data units according to one of claims 1 to 6, further comprising the step of:
transmitting to the radio resource control entity an indication on the quality of the channel between the relay node and the mobile node for enabling the radio resource control entity to re-transmit the data in one or more packet data units that can be transmitted via the channel to the mobile node.

8. The method for transmitting packet data units according to one of claims 1 to 7, wherein before transmitting the first packet data unit from the radio resource control entity to the mobile node, the following steps are performed:
transmitting a information about the channel quality from the mobile node via the relay node to the radio resource control entity,
deciding by the radio resource control entity on the intended size of the packet data units, based on the received channel quality information.

9. The method for transmitting packet data units according to claim 8, further comprising the steps of:
upon receiving in the relay node the channel quality information from the mobile node, determining whether to change the maximum transport block size, and
in case the maximum transport block is changed, informing the radio resource control entity about the change of the maximum transport block size.

10. The method for transmitting packet data units according to one of claims 1 to 9, wherein the relay node requests a status report from the mobile node, in case
the transport buffer of the relay node exceeds a pre-determined threshold, or
the arrival of a status report from the mobile node fails, or
one or more packet data units are to be deleted from the transport buffer of the relay node.

11. A relay node for forwarding packet data units received from a radio resource control entity to a mobile node, the relay node providing a communication channel between the radio resource control entity and the mobile node, the relay node comprising:
a receiver adapted to receive from the radio resource control entity a packet data unit destined to the mobile node,
in case the size of the packet data unit is determined by a processor to be smaller than or equal to a current maximum transport block size for the channel between the relay node and the mobile node, a transmitter is adapted to transmit the packet data unit to the mobile node, wherein the current maximum transport block size is set by the processor according to the quality of the channel between the relay node and the mobile node,
in case the size of the packet data unit is determined by the processor to be larger than the current maximum transport block size, the transmitter is adapted to request the radio resource control entity to re-transmit the data of the packet data unit in one or more packet data units that can be transmitted via the channel to the mobile node.

12. The relay node for forwarding packet data units according to claim 11, wherein the receiver is adapted to intercept a reception status report of a re-transmission protocol from the mobile node, the reception status report comprising at least information on packet data units transmitted from the radio resource control entity that have not been decoded successfully by the mobile node,
the processor is further adapted to determine whether each of the unsuccessful packet data units is still available in a transport buffer of the relay node,
for each of those unsuccessful packet data units being still available in the transport buffer of the relay node, in case the size of the unsuccessful packet data unit is determined by the processor to be smaller than or equal to the current maximum transport block size, the transmitter is adapted to re-transmit the unsuccessful packet data unit to the mobile node,
for each of those unsuccessful packet data units, in case the packet data unit is not available in the transport buffer or in case the size of the unsuccessful packet data unit is determined by the processer to be larger than the current maximum transport block size, the transmitter is adapted to request the radio resource control entity to re-transmit the data of the unsuccessful packet data unit in one or more packet data units that can be transmitted via the channel to the mobile node.

13. The relay node for forwarding packet data units according to claim 11 or 12, wherein the processor is adapted to generate an imitated reception status report comprising a negative-acknowledgment for the packet data unit the size of which has been determined by the processor to be larger than the current maximum transport block size for the channel, wherein the imitated reception status report optionally comprises non-acknowledgements for more than one packet data unit, and
the transmitter is adapted to transmit the imitated reception status report to the radio resource control entity.

14. A radio resource control entity for transmitting packet data units via a relay node to a mobile node, the relay node providing a communication channel between the radio resource control entity and the mobile node, the radio resource control entity comprising:
a receiver adapted to receive channel quality information,
a processor adapted to decide on the size of each packet data unit based on the received channel quality information,
the processor further adapted to generate the packet data units according to the decided size, and
a transmitter adapted to transmit the generated packet data units to the mobile node via the relay node.

15. The radio resource control entity for transmitting packet data units according to claim 14, wherein the receiver is further adapted to receive new channel quality information, and the processor is further adapted to adjust the decided size of each packet data unit according to the received new channel quality information.
